# EUROPEAN PATENT APPLICATION

(11) **EP 0 540 252 A1**
(43) Date of publication of application: **05.05.1993**
(21) Application number: 92309697.8
(22) Date of filing: 23.10.1992
(51) Int. Cl.: B60N 2/08, F16B 7/14

(54) **Locking device**

(30) Priority: 29.10.1991 GB 9122926
(71) Applicant: Dunlop Cox Limited, Nottingham NG8 4GP (GB)
(72) Inventor: Christopher, Hugh Charles, West Bridgford, Nottingham (GB)
(74) Representative: Treves, Barry William

(57) **Abstract**

A locking mechanism for a vehicle seat slide enabling the seat to be moved in a fore-and-aft direction but locked in any position between end limits.

The mechanism comprises an elongated member in the form of a tube (1) adapted to be fixed to the vehicle floor and two members (9,10) each having a frusto-conical surface (3 or 4), each member (9,10) encircling the tube (1) and fixed to the seat base (2). A ring of balls (5 or 6) each in a cage (24 or 23) is wedged between each frusto-conical surface (3 or 4) and the tube (1) by a biassing device (20, 21), thus preventing movement. A release handle (7) causes the force applied by the biassing device (20,21) to be removed and the seat is then capable of being adjusted to its new position.

## Description

This invention relates to a locking device, and in particular to a locking device for a seat slide assembly capable of preventing movement of the seat in a fore-and-aft direction once its position has been chosen by the seat occupant.

A vehicle seat slide assembly such as that provided to allow the fore-and-aft adjustment of a vehicle seat typically comprises a first elongated slide member adapted to be fixed to the vehicle floor and a second elongated slide member adapted to be attached to and carry the vehicle seat, the second member being slidably engaged with the first member. Bearings are provided between the two members to assist sliding. Conventionally two assemblies are provided, one on each side of the seat.

Various devices are known to allow the position of the second, moveable slide member to be chosen within limits by the seat occupant. Once in position the second, moveable slide member must be sufficiently well locked so that in a collision situation the second moveable slide member does not move relative to the first fixed member even if the collision causes a force of several times the weight of the seat occupant to be applied through the seat belt anchorage attached to the second member and/or if the members suffer distortion in the collision. Many prior art slide assemblies comprise a plurality of notches on the first, fixed member which are engaged by one or more teeth of a manually operated spring-loaded trigger member mounted on the second, moveable member. However such assemblies only allow the second, movable member to be moved to one of a plurality e.g. eight, spaced apart positions relative to the first, fixed member.

It is an object of the present invention to provide a locking device particularly for a vehicle seat slide, wherein the movable member can be positioned at any position relative to the fixed member between extreme limits i.e. is infinitely adjustable between said limits and once located will not move relative to the first member in a collision situation.

In accordance with the invention a locking device for locking a second member normally moveable longitudinally with respect to a first elongated member comprises a pair of tapered surfaces fixed to the second member to surround the first member, the surfaces being spaced apart longitudinally with respect to the first member and arranged with the taper angle of one tapered surface in the opposite sense to the taper angle of the other tapered surface, two sets of roller members each respectively associated with one of the two tapered surfaces, the roller members of each set being positioned around and in contact with the outer surface of the first member, biassing means to force the roller members into positions where they are wedged against each of the associated tapered surfaces to prevent movement of the second member relative to the first member, and release means operable to move the roller members against the force applied by the biassing means away from the associated frustoconical surfaces and hence allow movement of the second member relative to the first member.

Preferably the first elongated member has an outer surface of circular cross-section and the pair of tapered surfaces are frusto-conical surfaces and fixed to the second member surrounds the first member coaxially.

Preferably also the release means comprises a tubular component slideably movable on the first member and the biassing means comprises springs e.g. helical springs positioned generally around e.g. coaxially around the first member each acting against a stop associated with the second member. Each set of roller members e.g. balls may be positioned in a cage and the helical spring biassing means acts against the cage.

The invention further includes a seat slide assembly comprising a locking device as described above.

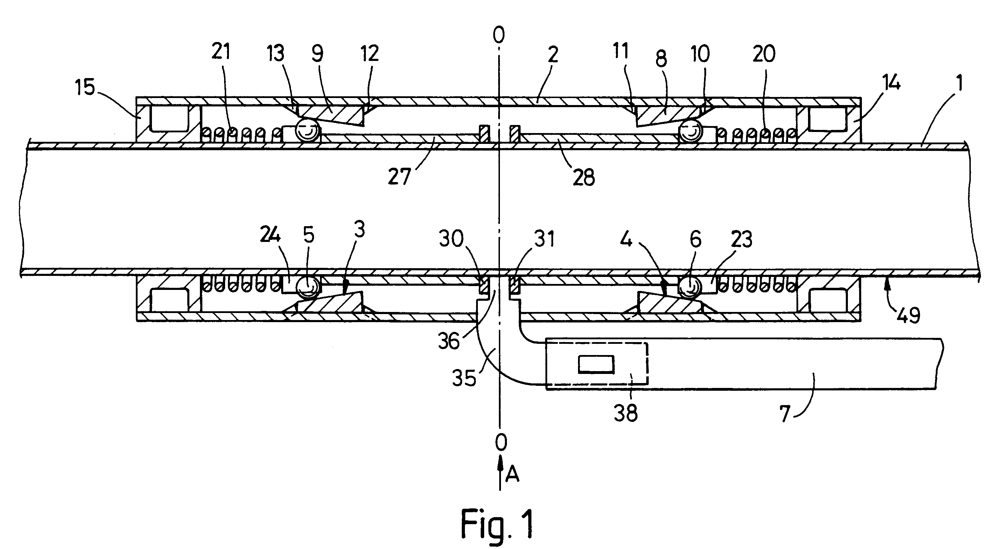

One embodiment of the invention, a locking device for a vehicle seat slide assembly, will now be described by way of example only with reference to the accompanying drawings of which;-
Figure 1 is a longitudinal horizontal cross-section through the device; and
Figure 2 is a scrap side view on arrow 8 of the device shown in Figure 1.

The device comprises a first elongated tubular member 1 made of steel and capable of being fixed to the vehicle floor in a fore-and-aft direction, a second tubular member 2 capable of moving longitudinally with respect to the first member, two rings 8,9 with internal frusto-conical surfaces 4,3 fixed to the second member 2, two sets of balls 5,6 associated respectively with the two tapered i.e. frusto-conical surfaces 3,4, and a release handle 7. The second member is adapted to carry the vehicle seat. The first member has a circular cross-section outer surface 49.

The second member 2 comprises a length of steel tube arranged coaxially to encircle the first member 1. Two angular end stops 14,15, one at each end of the second member are arranged to fit between the two members 1, 2. The stops 14, 15 are fixed to the second member 2 but capable of sliding along the first member 1. Conveniently the stops are each made of a suitable material e.g. polymeric (plastics) material such as nylon, polypropylene, or of metal coated on the surface which engages the first member 1 with a low-friction material such as polytetrafluoroethylene.

Positioned on the interior surface of the second member 2 and symmetrically with respect to the plane of symmetry 0-0 of the device between the end stops 14,15, are two hard steel rings 8,9 each respectively having frusto-conical surfaces 4, 5. The rings 8,9 are spaced apart from one another and from the end stops 14,15 longitudinally with respect to the two members. The rings 8,9 are fixed to the second member 2 by means of dimples or tangs 10,11,12,13 formed on each side of each ring 8,9. The cone angle of one frusto-conical surface 3 is in the opposite sense with respect to the cone angle of the other frusto-conical surface 4. Thus the internal diameter of each ring 8,9 is smallest on the side of the ring closer to the plane of symmetry 0-0 and largest on the side away from the said plane.

Arranged in the annular spaces radially inwards of the two frusto-conical surfaces 3,4 are two sets 5,6 of hard steel balls, one set being associated with each surface respectively. The diameter of the balls is such that they wedge between the outer surface 49 of the first member 1 and their associated frusto-conical surface 3,4. Each set of balls is positioned in a suitable cage 23, 24 so that the balls in each set are regularly spaced apart around the circumference of the first member 1.

Positioned respectively between each cage and the nearer end stop 14,15 so as to encircle the first member 1 coaxially are two helical springs 20,21, one spring 20 being positioned between one end stop 14 and one cage 23 and the other spring 21 being positioned between the other end stop 15 and the other cage 24. The springs 20,21 are arranged to be in compression so that a biassing force acts against the cages 23, 24 at all times to press the balls therein against the associated frusto-conical surface 3 or 4. Thus the two sets of balls 5,6 are wedged between the two frusto-conical surfaces and the facing exterior surface of the first member 1 and prevent unwanted movement of the second member 2 longitudinally with respect to the first member.

A release means is provided to enable the seat occupant to unlock the device and hence allow the position of the second member 2 to be adjusted relative to the first member 1 in a fore-and-aft direction. The release means comprises a pair of steel tubes 27,28 arranged coaxially on the first member 1. Each steel tube 27 or 28 is slidable simultaneously on the first member 1 outwards with respect to the plane of symmetry 0-0 so that their outer edges contact the two sets of balls 5,6 and move them outwards against the biassing force applied by the two helical springs 20,21.

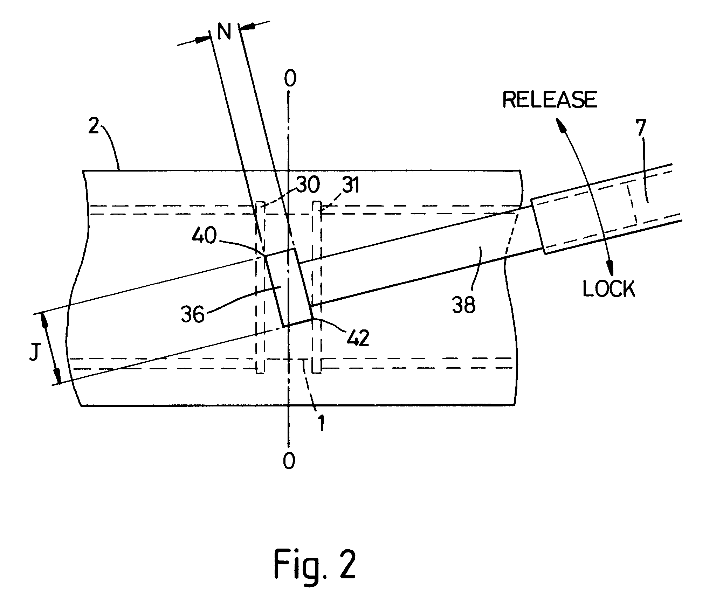

Positioned in a hole formed in the second member is an L-shaped rod 35 having a generally rectangular projection 36 formed on one end face of one of its two limbs and arranged to abut the first member 1. As can be seen in Figure 2 the projection has two diagonally opposed corners 40,42 each of which abuts a respective washer 30,31 which is positioned to surround the first member in contact with the inner end of the associated steel tube 27 or 28. The projection 36 has its two longer edges extending at right angles to the length of the handle 7. Their length J is greater than the width of the rod which forms part of the handle. The shorter edges have lengths N less than the rod width. The other limb 38 of the rod extends at right angles to the limb having the projection 36 and fits inside a tubular part of the handle 7 lying alongside the second member 2. Normally the handle 7 lies parallel to the two members 1,2 in a generally horizontal position, the second member 2 being locked relative to the first member 1. Movement of the handle from a horizontal, locked position towards the vertical, released position rotates the rod 35 and in particular the projection 36. The two corners 40,42 contact the washers 30,31 to cause them to move apart i.e. away from the plane of symmetry 0-0. When the handle is vertical the washers are spaced apart by their maximum distance i.e. by the length J of the longer edges of the rectangular projection 36. This movement of the washers 30,31 causes the two tubes 27, 28 and the balls 5,6 at the opposite end of the tubes to the washers to move against the spring biassing and out of contact with the frusto-conical surfaces 3, 4. The seat occupant may then reposition the seat carried on the second member 2 with respect to the first member 1 and once in the required new position, unlock it in the new position by moving the handle 7 back to the horizontal position. This allows the two springs 20,21 to move the cages 23,24, the sets of balls 5,6, the steel tubes 27,28 and the washers 30,31 towards the plane of symmetry 0-0. In this horizontal position of the handle the distance between the washers 30,31 is equal to the length N of the shorter edges of the rectangular projection 36.

Preferably two locking devices are provided, one for each side of the seat, linked together by a cable, rod, lever system or other mechanical linkage so that operation of the handle on one device operates the release mechanisms of both devices.

## Claims

1. A locking device for locking a second member (2) normally movable longitudinally with respect to a first elongated member (1) characterised by comprising a pair of tapered surfaces (3,4) fixed to the second member (2) to surround the first member (1), the surfaces (3,4) being spaced apart longitudinally with respect to the first member (1) and arranged with the taper angle of one tapered surface (3) in the opposite sense to the taper angle of the other tapered surface (4), two sets of roller members (5,6) each respectively associated with one of the two tapered surfaces (3,4), the roller members (5,6) of each set being positioned around and in contact with the outer surface (49) of the first member (1), biassing means (20,21) to force the roller members (5,6) into position where they are wedged against each of the associated tapered surfaces (3,4) to prevent movement of the second member (2) relative to the first member (1), and release means (27,28) operable to move the roller members against the force applied by the biassing means (20,21) away from the associated tapered surfaces (3,4) and hence allow movement of the second member (2) relative to the first member (1).

2. A locking device in accordance with Claim 1 characterised in that the first elongated member (1) has an outer surface (49) of circular cross-section and the tapered surfaces (3,4) are frusto-conical.

3. A locking device in accordance with Claim 1 or Claim 2 characterised in that the pair of tapered surfaces (3,4) fixed to the second member (2) surrounds the first member (1) coaxially.

4. A locking device in accordance with any one of the preceding claims characterised in that the biassing means (20,21) comprises springs (20,21) positioned generally around the first member (1), each acting against a stop (14 or 15) associated with the second member (2).

5. A locking device in accordance with any one of the preceding claims characterised in that each set of roller members (5 or 6) is positioned in a cage (23 or 24).

6. A locking device in accordance with Claim 5 characterised in that each roller member comprises a ball (5 or 6).

7. A locking device in accordance with Claim 5 or Claim 6 characterised in that the spring biassing means (20 or 21) acts against the associated cage (23 or 24).

8. A locking device according to any one of the preceding claims characterised in that the release means (27, 28) comprises tubular components (27,28) slidably movable on the first member (1).

9. A locking device according to Claim 8 characterised by comprising two tubular members (27,28) and a rectangular projection (36) positioned therebetween, the tubular components (27,28) being positioned to be moved apart against the force applied by the biassing means (20,21) by rotation of the rectangular projection (36).

10. A locking device according to Claim 9 characterised in that the projection (36) is formed on a rod (35) supported by the second member (2).

11. A locking device according to Claim 10 characterised by comprising a handle (7) secured to the rod (35), operation of the handle (7) enabling the projection (36) to be rotated.
